# FASCICULE DE BREVET EUROPEEN

(11) **EP 1 938 960 B1**
(45) Date de publication et mention de la délivrance du brevet: **02.06.2010**
(21) Numéro de dépôt: 07118440.2
(22) Date de dépôt: 15.10.2007
(51) Int. Cl.: B29D 30/30, B29D 30/16, B29D 30/70

(54) **Procédé de détermination des paramètres de fonctionnement d'un dispositif de pose d'un fil par projection**
Verfahren zum Bestimmen der Betriebsparameter einer Vorrichtung zum Verlegen eines Kabels durch Projektion
Method for determining the operating parameters of a device for laying a wire by projection

(30) Priorité: 02.11.2006 FR 0609645
(43) Date de publication de la demande: 02.07.2008
(73) Titulaire: Société de Technologie Michelin, 63000 Clermont-Ferrand (FR); Michelin Recherche et Technique S.A., 1763 Granges-Paccot (CH)
(72) Inventeur: Martin, Pascal, 63730 Corent (FR); Verjat, Jean-François, 63500 Issoire (FR); Cordaillat, Dominique, 69126 Brindas (FR)
(74) Mandataire: Reynaud, Georges

(56) Documents cités:
- EP-A1- 0 248 301
- EP-A1- 0 845 348
- US-A- 3 894 906

## Description

L'invention concerne en particulier la fabrication des pneumatiques et se rapporte plus précisément à la fabrication d'armatures de renforcement.

Il est connu de l'état de la technique un procédé de fabrication dans lequel de tels renforcements sont fabriqués directement sur l'ébauche d'un pneumatique à partir d'un fil continu par projection dudit fil à la manière d'un fouet et non plus sous forme de nappes que l'on incorpore lors de l'assemblage du pneumatique.

Le terme fil doit être compris dans un sens tout à fait général, englobant un mono filament, un multi filament, un câblé ou un retors ou un assemblage équivalent, et ceci, quelle que soit la matière constituant le fil ou le traitement qu'il pourrait subir, par exemple un traitement de surface pour favoriser sa liaison intime avec du caoutchouc, voire encore un traitement de gommage entourant ledit fil d'une couche de caoutchouc pour permettre son adhésion directe sur le support lors de sa projection.

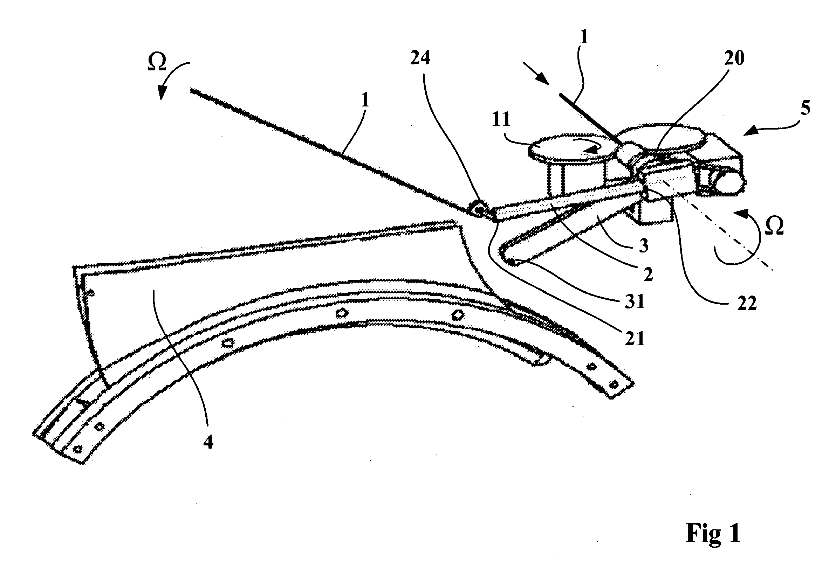

Un tel dispositif est décrit dans la publication EP 248 301. La figure 1 illustre les organes principaux qui composent ce type d'appareil.

Le fil 1 est introduit dans le dispositif depuis une source d'alimentation (non représentée). L'appareil projette des tronçons de fil 10 sur une surface de réception S qui peut être formée indifféremment par le sommet d'une ébauche de pneumatique ou encore par un anneau de support séparé ou bien encore par une surface plane.

Ledit dispositif comprend :
- des moyens d'appel 11 de fil 1 à partir d'une source de fil,
- un conduit rotatif 2 fixé sur un arbre 20 constituant l'axe de rotation R dudit conduit, de manière telle que l'extrémité radiale extérieure 21 dudit conduit soit orientée sensiblement radialement par rapport à l'axe de rotation, ledit conduit recevant le fil 1 par son extrémité centrale 22 opposée à ladite extrémité radiale extérieure 21 en provenance desdits moyens d'appel, ledit fil sortant par ladite extrémité radiale extérieure, lesdits moyens d'appel contrôlant la vitesse linéaire d'avance du fil à l'intérieur dudit conduit rotatif,
- des moyens pour entraîner en rotation ledit conduit rotatif,
- des moyens pour sectionner le fil (31, 24) agissant sur le fil de façon à libérer un tronçon 10 à chaque tour dudit conduit rotatif.

Ce dispositif peut comprendre en outre un guide fil 4, pour recevoir et guider des tronçons de fil, comme cela est décrit dans la publication EP 248 301, ou encore dans la publication EP 845 348.

Le procédé décrit dans la publication EP 248 301, a pour objet un procédé de réalisation d'un renforcement pour pneumatique ledit, renforcement comportant des tronçons de fils 10 adjacents et sensiblement parallèles, dans lequel chaque tronçon de fil 10 est projeté individuellement à son emplacement sur une surface de réception S. Les tronçons de fil 10 sont projetés par des moyens 5 en rotation 2, la surface de réception et le fil ayant des propriétés d'auto-adhésion.

Lesdits moyens 5 en rotation comprennent
- des moyens d'appel 11 de fil 1 à partir d'une source de fil,
- un conduit rotatif 2 d'une longueur donné et fixé sur un arbre 20 d'axe R constituant l'axe de rotation dudit conduit, de manière telle que l'extrémité radiale extérieure 21 dudit conduit soit orientée sensiblement radialement par rapport à l'axe de rotation, ledit conduit recevant le fil 1 par son extrémité centrale 22 opposée à ladite extrémité radiale extérieure 21 en provenance desdits moyens d'appel, ledit fil sortant par ladite extrémité radiale extérieure, lesdits moyens d'appel contrôlant la vitesse linéaire d'avance du fil à l'intérieur dudit conduit rotatif,
- des moyens pour entraîner en rotation ledit conduit rotatif,
- des moyens pour sectionner le fil (24, 31).

Aussi, pour plus de détails sur le dispositif et le procédé du type connu, il est suggéré de consulter les publications susmentionnées.

Il s'avère néanmoins que, en pratique, il est souvent difficile de faire fonctionner ce type d'appareil en raison du grand nombre de moyens de réglage et de la forte incidence de leur variation sur la qualité de réalisation des renforcements.

L'objet de l'invention concerne la détermination des paramètres de fonctionnement d'un dispositif du type connu, de manière à conférer au tronçon de fil 10 une trajectoire aérienne optimale susceptible d'amener ledit tronçon sur la surface de réception de façon à assurer une pose régulière et précise.

L'invention est définie dans la revendication 1. Des modes d'exécution préférentiels de l'invention sont définies dans les revendications dépendantes.

Il a été mis en évidence de façon expérimentale que certains paramètres pouvaient être considérés comme étant de premier ordre, et qu'un choix judicieux du réglage des moyens influents sur ces paramètres pouvait s'avérer être une condition préalable à l'optimisation des conditions de fonctionnement des autres organes de l'appareil.

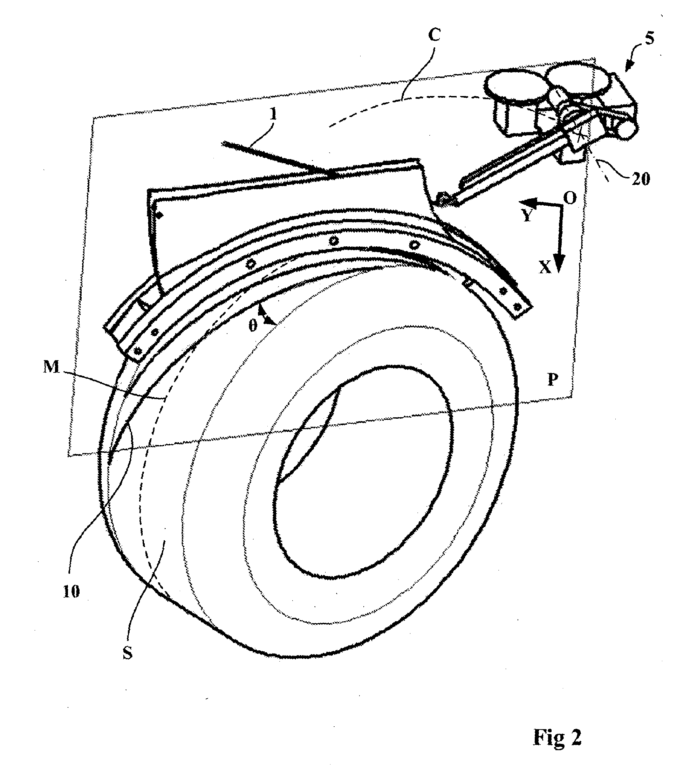

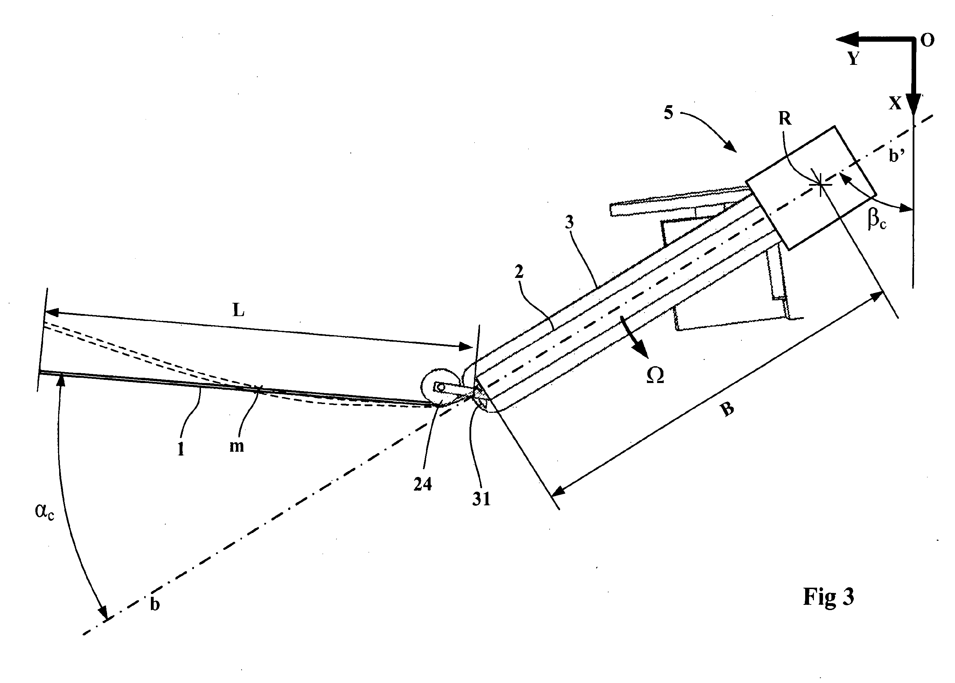

Pour les besoins de la compréhension de la description qui va suivre, on s'appuiera sur les figures 2 et 3, où la figure 2 montre une vue schématique générale du dispositif et son orientation par rapport à une surface de réception formée par le sommet d'un pneumatique, et la figure 3 montre une vue du dispositif au moment du sectionnement du fil, juste avant la formation du tronçon de fil.

Il est proposé par convention d'utiliser les annotations suivantes pour décrire les paramètres principaux du dispositif.

On désigne par M la trace de l'intersection du plan méridien de la surface de réception S avec ladite surface. Lorsque la surface de réception est formée par le sommet d'une ébauche de pneumatique, ce plan méridien est confondu avec le plan méridien du pneumatique et la ligne M correspond au centre de la surface de réception dans la direction longitudinale.

On désignera par le repère P le plan dans lequel se déplace le conduit rotatif 2 en rotation et, par voie de conséquence, le plan dans lequel le fil et le tronçon de fil sont entraînés. Le plan est communément désigné comme le plan de fouettage ou de rotation. Le conduit rotatif dans lequel circule le fil comporte un axe bb'. La trace de ce plan sur la surface de réception détermine également la ligne sur laquelle le tronçon de fil est destiné à « atterrir ». Cette trace peut être une droite, si la surface de réception est un plan, ou avoir une forme convexe si la surface de réception est formée par le sommet d'un pneumatique. La position du dispositif de pose et de son centre de rotation R ainsi que les déplacements dans le plan de rotation P peuvent être repérés à l'aide d'un repère orthonormé OX, OY.

La vitesse de rotation du bras autour de son axe R est désignée par le repère Ω. Cet axe de rotation est perpendiculaire au plan P.

On désigne par B la longueur utile du conduit rotatif entre l'axe de rotation et le point où s'effectue la séparation du tronçon et du fil.

On désigne par L la longueur du tronçon de fil qui est projeté sur la surface de réception. A chaque tour du conduit le moyen d'appel délivre donc une longueur de fil égale à L. Cette longueur est imposée par la définition de l'architecture du pneumatique que l'on cherche à réaliser. Le tronçon de fil comporte une partie arrière qui est la partie du tronçon située du coté du moyen de sectionnement et de l'extrémité 21 du conduit 2, et une partie avant qui est la partie du tronçon la plus éloignée radialement de l'extrémité 21 du conduit 2. Le milieu du tronçon 10 est désigné par le repère m.

Lorsque le fil se déroule, on observe qu'il prend une forme sensiblement rectiligne sous l'effet de la force centrifuge. On observe également que le fil forme un angle avec l'axe bb' du conduit. On désigne par α_{c} l'angle formé par le fil 1 avec l'axe bb' au moment du sectionnement du fil, juste avant la formation du tronçon de fil 10. Cet angle est également désigné sous le terme d'angle fil fouet. Il est néanmoins possible, lorsque la densité du fil est relativement faible, ce qui est le cas par exemple des fils textiles, que la forme du fil ne soit pas totalement rectiligne. En effet sous l'effet de la vitesse, les effets du frottement du fil avec l'air deviennent sensibles, en particulier du coté de la partie avant du tronçon. Dans ces conditions on évalue l'angle α_{c} en mesurant l'angle formé par la droite passant par le milieu m du tronçon et l'axe du conduit comme cela est illustré sur la figure 3 avec le tracé d'un fil en pointillé passant par le point m.

On désigne par β_{c} l'angle formé par l'axe bb' avec une direction du plan P au moment précis du sectionnement du fil (ici la direction OX). Cet angle est désigné aussi sous le terme d'avance à la coupe.

Enfin, l'angle θ désigne l'angle de pose du tronçon de fil sur la surface de réception et correspond généralement à l'angle formé par le fil avec la direction longitudinale du pneumatique.

Il est connu des documents de l'art antérieur, qu'une des premières conditions à satisfaire consiste à orienter le plan P selon l'angle de pose θ des tronçons de fil sur la surface de réception. L'angle θ est imposé par l'architecture du pneumatique. A cet effet on peut installer le dispositif de pose 5 sur un support orientable par rapport à la surface de réception ou, de manière alternative, on peut aussi orienter la surface de réception par rapport au dispositif de pose 5. Cette configuration finale est illustrée par la figure 2.

La figure 3 représente le dispositif vu dans le plan P dans lequel vont s'opérer dorénavant tous les mouvements.

L'homme du métier, saura, en suivant les enseignements des publications antérieures, positionner le dispositif de pose 5 dans l'espace libre du plan P, de telle sorte que d'une part les pièces en mouvement ne viennent pas heurter les éléments fixes tels que la surface de réception ou le guide fil et que, d'autre part, lorsque le conduit est en rotation, le bras circule dans le cadran du plan dans lequel le fil vient fouetter la surface de réception S.

Dans une première approche, on peut positionner le dispositif de pose 5 de manière à ce que la plus courte distance entre la surface de réception et le point de la trajectoire de circulation de l'extrémité 21 du conduit le plus proche de la surface de réception, soit inférieure à la longueur L du tronçon à déposer. Cette distance peut même être très inférieure à la longueur L et proche de la valeur nulle, sous réserve du respect de certaines conditions, comme cela sera exposé par la suite.

Selon l'invention, le paramètre de premier ordre qu'il convient de déterminer est la valeur de l'angle β_{c}. La valeur de l'avance à la coupe détermine en effet directement l'angle avec lequel le tronçon de fil « atterrit » sur la surface de réception. Il a été mis en évidence de façon expérimentable que l'optimum de fonctionnement est atteint lorsque le premier contact entre le tronçon de fil 10 et la surface de réception S s'effectue au niveau du tiers arrière dudit tronçon. En d'autre terme il convient que le tronçon de fil soit relevé de l'avant au moment de son « atterrissage » de manière analogue à un aéroplane.

Pour déterminer que ces conditions sont réunies, il est possible de s'aider d'un moyen de visualisation, tel qu'un stroboscope ou encore d'un moyen d'enregistrement photosensible tel qu'une caméra rapide d'analyse d'image, qui permet de déterminer expérimentalement le premier point de contact entre le tronçon et la surface de réception et d'apprécier l'angle de pose du fil sur la surface de réception. On modifie alors en conséquence l'avance à la coupe en agissant sur le mécanisme de commande des moyens de coupe.

Comme on le verra par la suite, il importe peu, à ce stade de la détermination des paramètres du procédé de pose, que le tronçon de fil soit mal centré, ou encore que la pose puisse être considérée comme irrégulière.

Toujours selon l'invention, il a été mis en évidence que la valeur de l'angle α_{c} est également un paramètre déterminant pour obtenir une pose régulière du fil, afin de rendre fiable et reproductible la dépose du tronçon de fil sur une surface de réception à l'aide d'un dispositif tel que décrit dans la publication EP 248 301 citée en référence.

Il a été mis en évidence, de manière également expérimentale, qu'il convenait de faire en sorte que la valeur de l'angle fil fouet soit comprise entre 35° et 65°.

On observe en effet que lorsque l'angle fil fouet est inférieur à 35°, la régularité de la pose de l'extrémité arrière du fil peut être affectée, et que par ailleurs, on rencontre des difficultés pour faire adhérer la partie arrière du tronçon de fil sur la surface de réception. Lorsque l'angle fil fouet est trop élevé et supérieur à 65°, on affecte la régularité de pose de la partie avant du tronçon de fil.

Pour ajuster la valeur de cet angle il suffit de faire varier la longueur B du conduit 2.

L'évaluation de l'angle fil fouet au moment de la coupe s'effectue par les mêmes moyens de visualisation que ceux utilisés pour déterminer l'avance à la coupe.

Si on ajuste la longueur du conduit après avoir déterminé l'avance à la coupe, il est possible qu'il soit nécessaire de modifier à nouveau la valeur de ladite avance à la coupe de manière à respecter le critère relatif à la façon dont le tronçon de fil « atterrit » sur la surface de réception et tel que décrit dans les paragraphes précédents concernant cette caractéristique.

On procède alors de manière itérative jusqu'à ce que les valeurs de ces deux angles soit ajustées dans les limites indiquées et permettant d'obtenir les effets désirés.

La vitesse de rotation Ω ou la densité du fil sont également, mais dans une moindre mesure, des facteurs susceptibles d'influencer la valeur de l'angle fil fouet. En considérant que la densité du fil est une valeur fixée par l'architecture du pneumatique, il est possible de faire varier la vitesse de rotation pour agir finement sur la valeur de l'angle fil fouet α_{c} lorsque l'on ne désire pas modifier à nouveau la valeur β_{c.} de l'avance à la coupe ou la longueur du conduit lorsque l'on est proche des limites supérieures et inférieures de l'angle fil fouet.

Ainsi à titre indicatif, on obtient expérimentalement les valeurs suivantes :

| **Longueur B du conduit** | **Longueur L du tronçon de fil** | **Angle fil fouet α_{c}** | **Vitesse de rotation Ω** | **Densité du fil** |
|---|---|---|---|---|
| B = 50 mm | L = 100 mm | 36° | 6000 tr/min | 1,3 g/m |
| B = 50 mm | L = 200 mm | 60° | 6000 tr/min | 1,3 g/m |
| *B = 50 mm* | *L = 300 mm* | *84°* | *6000 tr*/*min* | *1,3 g*/*m* |
| *B = 100 mm* | *L = 100 mm* | *19°* | *6000 tr*/*min* | *1,3 g*/*m* |
| B = 100 mm | L = 200 mm | 37° | 6000 tr/min | 1,3 g/m |
| B = 100 mm | L = 300 mm | 56° | 6000 tr/min | 1,3 g/m |
| B = 150 mm | L = 300mm | 45° | 2500 tr/min | 2 g/m |
| *B = 250 mm* | *L = 320 mm* | *33°* | *3000 tr*/*min* | *2 g*/*m* |
| *B = 200 mm* | *L = 650 mm* | *83°* | *2500 tr*/*min* | *1,3 g*/*m* |
| B= 300 mm | L = 650 mm | 57° | 2500 tr/min | 1,3 g/m |

Les valeurs en italique sont les valeurs pour lesquelles les résultats de pose n'ont pas été jugés acceptables pour les raisons citées plus haut.

De manière à achever le réglage du procédé, et lorsque les valeurs de l'avance à la coupe et de l'angle fil fouet sont dans les limites souhaitées, il convient de faire en sorte que le centre m du tronçon de fil soit positionné sur la trace M de l'intersection du plan méridien de la surface de réception S avec ladite surface de réception. En d'autres termes, que le tronçon de fil une fois posé soit centré par rapport à la direction longitudinale de la surface de réception.

Pour ce faire, on déplace le dispositif de pose 5 dans le plan P tangentiellement le long d'une ligne sensiblement homothétique à l'intersection du plan P avec la surface de pose S. Cette ligne est représentée à la figure 2 et désignée sous le repère C.

En effectuant ce déplacement de façon tangentielle à la ligne C on peut modifier la valeur relative de l'angle β_{c}. Ceci ne devrait pas être en mesure d'affecter la valeur de l'incidence du tronçon de fil par rapport à la surface de réception. Toutefois, si cela s'avérait nécessaire, il est encore possible de retoucher, quoique légèrement, une fois de plus la valeur de l'avance à la coupe. On procèdera alors comme indiqué aux paragraphes ci-dessus, en s'assurant en également que le centrage du tronçon n'a pas été modifié.

Ainsi, selon l'invention, il suffit d'agir sur un nombre restreint de paramètres pour déterminer les conditions de fonctionnement optimales du procédé. Ayant connaissance des paramètres influant au premier ordre l'homme du métier n'aura pas de mal à réaliser les éventuelles itérations nécessaires et obtenir les conditions de pose permettant de réaliser le renforcement du sommet d'un pneumatique ou une nappe de renfort conforme aux règles de construction définies par l'architecture du pneumatique ou de la nappe, tout en respectant les tolérances de fabrication nécessaires à l'obtention des critères de qualité recherchés.

## Revendications

1. Procédé de détermination des paramètres de fonctionnement d'un dispositif de fabrication d'un renforcement à partir d'un fil (1) déposé directement à sa place finale en projetant des tronçons de fil (10) sur une surface de réception (S) ledit dispositif comportant un ensemble comprenant :
- un conduit rotatif (2) d'une longueur B donnée et d'axe longitudinal bb', fixé sur un arbre (20) d'axe R constituant l'axe de rotation dudit conduit, de manière telle que l'extrémité radiale extérieure (21) dudit conduit soit orientée sensiblement radialement par rapport à l'axe de rotation, ledit conduit recevant le fil (1) par son extrémité centrale (22) opposée à ladite extrémité radiale extérieure (21) en provenance desdits moyens d'appel, ledit fil sortant par ladite extrémité radiale extérieure,
- des moyens d'appel (11) de fil (1) à partir d'une source de fil, contrôlant la vitesse linéaire d'avance du fil à l'intérieur dudit conduit rotatif (2),
- des moyens pour entraîner ledit conduit en rotation à une vitesse Ω autour de l'axe R, ledit conduit circulant dans un plan de rotation P,
- des moyens pour sectionner le fil (24, 31),
**caractérisé en ce que** on détermine l'angle β_{c} formé par le conduit rotatif (2) et unie direction (OX) du plan P au moment du sectionnement du tronçon de fil, de manière à ce que le premier contact entre le tronçon de fil (10) et la surface de réception S s'effectue au niveau du tiers arrière dudit tronçon.

2. Procédé selon la revendication 1, dans lequel on fait varier la longueur B du conduit rotatif (2) de manière à ce que l'angle α_{c} formé par le fil 1 avec l'axe bb' au moment du sectionnement du fil soit comprise entre 35° et 65°.

3. Procédé selon la revendication 2, dans lequel on fait également varier la vitesse de rotation Ω pour faire varier l'angle α_{c}.

4. Procédé selon l'une des revendications 1 à 3, dans lequel on déplace le dispositif de pose dans le plan de rotation P pour centrer le tronçon de fil (10) sur la surface de réception S.

5. Procédé selon la revendication 4 dans lequel on déplace le dispositif tangentiellement le long d'une ligne sensiblement homothétique à l'intersection du plan P avec la surface de pose S.

6. Procédé selon l'une des revendications 1 à 5, dans lequel on utilise un moyen de visualisation pour évaluer les positions respectives du conduit et du fil au moment du sectionnement, ainsi que les positions relatives du tronçon de fil (10) et de la surface de pose S au moment du premier contact entre le tronçon de fil et la surface de pose.

7. Procédé selon la revendication 6 dans lequel le moyen de visualisation est un moyen stroboscopique.

8. Procédé selon la revendication 6 dans lequel le moyen de visualisation est un moyen d'enregistrement photosensible.

## Claims

1. Method for determining the operating parameters of a device for manufacturing a reinforcement from a thread (1) laid directly in its final position by spraying lengths of thread (10) onto a receiving surface (S), the said device comprising an assembly comprising:
- a rotary conduit (2) of given length B and of longitudinal axis bb' fixed to a shaft (20) of axis R constituting the axis of rotation of the said conduit, so that the outer radial end (21) of the said conduit is directed substantially radially with respect to the axis of rotation, the said conduit receiving the thread (1) via its central end (22), which is the opposite end to the said outer radial end (21), from the said feed means, the said thread leaving via the said outer radial end,
- feed means (11) for feeding thread (1) from a source of thread, the said feed means controlling the linear rate of advance of the thread inside the said rotary conduit (2),
- means for rotating the said conduit at a speed Ω about the axis R, the said conduit running in a plane of rotation P, and
- thread cutting means (24, 31),
**characterized in that** the angle β_{c} formed by the rotary conduit (2) and a direction (OX) of the plane P at the time that the length of thread is cut is determined in such a way that the initial contact between the length of thread (10) and the receiving surface S is one third of the way from the rear of the said length.

2. Method according to Claim 1, in which the length B of the rotary conduit (2) is varied in such a way that the angle α_{c} formed by the thread 1 with the axis bb' at the time the thread is cut ranges between 35° and 65°.

3. Method according to Claim 2, in which the rotational speed Ω is also varied in order to vary the angle α_{c}.

4. Method according to one of Claims 1 to 3, in which the laying device is moved in the plane of rotation P in order to centre the length of thread (10) on the receiving surface S.

5. Method according to Claim 4, in which the device is moved tangentially along a line substantially homothetic with the intersection of the plane P with the laying surface S.

6. Method according to one of Claims 1 to 5, in which use is made of a visualizing means for evaluating the respective positions of the conduit and of the thread at the time of cutting, and the relative positions of the length of thread (10) and of the laying surface S at the time of initial contact between the length of thread and the laying surface.

7. Method according to Claim 6, in which the visualizing means is a stroboscopic means.

8. Method according to Claim 6, in which the visualizing means is a photosensitive recording means.

## Patentansprüche

1. Verfahren zur Bestimmung der Betriebsparameter einer Vorrichtung zur Herstellung einer Verstärkung ausgehend von einem Draht (1), der direkt an seinem endgültigen Platz aufgebracht wird, indem Drahtabschnitte (10) auf eine Aufnahmefläche (S) projiziert werden, wobei die Vorrichtung eine Einheit aufweist, die enthält:
- einen drehbaren Kanal (2) mit einer gegebenen Länge B und mit einer Längsachse bb', der an einer Welle (20) mit einer die Drehachse des Kanals bildenden Achse R derart befestigt ist, dass das äußere radiale Ende (21) des Kanals bezüglich der Drehachse im Wesentlichen radial ausgerichtet ist, wobei der Kanal den Draht (1) über sein zentrales Ende (22) entgegengesetzt zum äußeren radialen Ende (21) von Abrufeinrichtungen kommend aufnimmt, wobei der Draht durch das äußere radiale Ende austritt,
- Einrichtungen (11) zum Abrufen von Draht (1) ausgehend von einer Drahtquelle, die die lineare Vorschubgeschwindigkeit des Drahts innerhalb des drehbaren Kanals (2) steuern,
- Einrichtungen, um den Kanal mit einer Geschwindigkeit Ω um die Achse R in Drehung zu versetzen, wobei der Kanal in einer Drehebene P kreist,
- Einrichtungen, um den Draht abzulängen (24, 31),
**dadurch gekennzeichnet, dass** der vom drehbaren Kanal (2) und einer Richtung (OX) der Ebene P im Moment des Ablängens des Drahtabschnitts gebildete Winkel β_{c} so bestimmt wird, dass der erste Kontakt zwischen dem Drahtabschnitt (10) und der Aufnahmefläche S in Höhe des hinteren Drittels des Abschnitts erfolgt.

2. Verfahren nach Anspruch 1, bei dem die Länge B des drehbaren Kanals (2) so variiert wird, dass der vom Draht 1 mit der Achse bb' im Moment des Ablängens des Drahts gebildete Winkel α_{c} zwischen 35° und 65° liegt.

3. Verfahren nach Anspruch 2, bei dem ebenfalls die Drehgeschwindigkeit Ω variiert wird, um den Winkel α_{c} zu variieren.

4. Verfahren nach einem der Ansprüche 1 bis 3, bei dem die Verlegevorrichtung in der Drehebene P verschoben wird, um den Drahtabschnitt (10) auf die Aufnahmefläche S zu zentrieren.

5. Verfahren nach Anspruch 4, bei dem die Vorrichtung tangential entlang einer Linie im Wesentlichen homothetisch zu der Schnittstelle der Ebene P mit der Verlegefläche S verschoben wird.

6. Verfahren nach einem der Ansprüche 1 bis 5, bei dem eine Anzeigeeinrichtung verwendet wird, um die Positionen des Kanals bzw. des Drahts im Moment des Ablängens sowie die Positionen des Drahtabschnitts (10) bzw. der Verlegefläche S im Moment des ersten Kontakts zwischen dem Drahtabschnitt und der Verlegefläche zu ermitteln.

7. Verfahren nach Anspruch 6, bei dem die Anzeigeeinrichtung eine stroboskopische Einrichtung ist.

8. Verfahren nach Anspruch 6, bei dem die Anzeigeeinrichtung eine lichtempfindliche Aufzeichnungseinrichtung ist.
